# EUROPEAN PATENT APPLICATION

(11) **EP 0 798 096 A1**
(43) Date of publication of application: **01.10.1997**
(21) Application number: 96890057.1
(22) Date of filing: 25.03.1996
(51) Int. Cl.: B29C 45/18

(54) **Method of and apparatus for sprueless molding**

(71) Applicant: Sony DADC Austria AG, A-5081 Anif (AT)
(72) Inventor: Kendlbacher, Peter, 5020 Salzburg (AT); Wittig, Franz, 5452 Pfarr-Werfen (AT)
(74) Representative: Kliment, Peter, Dipl.-Ing.

(57) **Abstract**

In a method of and an appratus for molding a plastic, pellet type raw material is supplied from the suppy tube (5). A predetermined quantity of the supplied material is then fed by the feed screw (6a) in the feed cylinder (6) into the main cylinder (8) through the connecting channel (8a). The material is heated and molten by a heater provided in the main cylinder (8). The molten material is fed by the main screw (8b) through the injection nozzle (9) into the cavity (12) formed by the mold (2). The sprue (4a) and/or runner is separated by the pusher (16) from the formed plasitcs (4) and the substrate (4) is separated from the mold (2). The separated sprue (4a) and/or runner is collected by the funnel (17) and sucked by the vacuum pump 21 together with the material dust being caused by pushing the sprue (4a) out from the subtrate (4) remaining in the mold (2) so that the sprue (4a) can be fed back into the material flow especially between the feed cylinder (6) and the main cylinder (8) and the material dust can be filtered out.

## Description

The invention relates to method of and apparatus for molding, and more specifically to method of and apparatus for molding to enable recycling of sprue more efficiently.

In a process of producing plastics, hot molten raw material is injected through an injection nozzle and a sprue channel or extension gate and/or a runner channel into the cavity formed by the closed mold. After cooling, the mold is opened and the molded plastic is removed from the mold. The sprue and/or runner which is formed in the sprue channel and/or the runner channel is also separated from the molded plastics and taken away.

In case of production of substrate of optical disc, for example, each sprue taken away from each formed substrate is 3 to 4 % of the substrate. Therefore, many trials of reduction of sprue channel size or elimination of sprue channel had been proposed and partially implemented in order to reduce cost and waste.

However, the quality of an optical disc is not only defined by the geometrical dimensions but also by its optical characteristics such as refraction index or birefringence. Therefore, it is important that the injected material is homogeneous and can cool down in the mold without stress. Both the homogeneity and the stress of the material are strongly influenced by the length of the sprue channel.

When the mold is opened after an injection, the sprue will be separated from the material remaining in the tip of the nozzle. In the transition region between the watercooled sprue channel and the heated nozzle, the remaining material in the tip of the nozzle becomes somewhat cooler than the heated material in the nozzle behind of it.

During the next injection cycle, the heated material will be pressed into the cooler material remaining the tip of the nozzle. Because of the higher viscosity of the cooler material, a pressure will be increased until the cooler material is pressed out of the nozzle. The inhomogeneous cooler material will be absorbed in the volume of the sprue whereas the hot material breaks the cooler material and passes it with a higher velocity. The hot material slows down in the sprue channel before it reaches the cavity.

If the sprue channel is too short, very fast material will stream into the cavity and causes the danger of air inclusions which will lead to inhomogeneities and stress in the material during cooling down and reduce the optical quality of the discs. Therefore, the sprue channel has an indispensable function during the molding process, but the sprue formed in the sprue channel becomes waste afterwards.

Since it is waste of the material if such sprue and/or runner is thrown away or abandoned, recently it is proposed that such sprue and/or runner is mixed with the virgin material after broken into small pieces or regranulate and recycled. However, no method of or apparatus for recycling such sprue and/or runner efficiently is known.

Especially, in case of production of substrates of optical discs, it is very important to keep optical characteristics required for the substrate. If the sprue and/or runner is mixed with the virgin material in unpredictable ration, the optical characteristics of the formed substrate may be strongly influenced by the recycled material to become out of tolerance.

According to the invention, this problem is solved by a method or apparatus in that the sprue and/or runner separated from the formed plastics is directly fed back into the material flow.

The invention will now be described by way of examples and with reference to the accompanying drawings in which:
Fig. 1 is a schematic drawing showing an example of injection molding machine in accordance with the invention.
Figs. 2A and 2B are enlarged drawings showing the relevant parts of the injection molding machine shown in Fig. 1.
Fig. 3 is a further enlarged drawing showing the detail of the unloader, funnel and pusher shown in Fig. 2B.
Fig. 4 is a drawing showing a sectional view of the nozzle, sprue channel and gate and cavity of the injection machine shown in Fig. 1.
Fig. 5 is a drawing showing a sectional view of the substrate and sprue formed by the injection machine shown in Fig. 1.

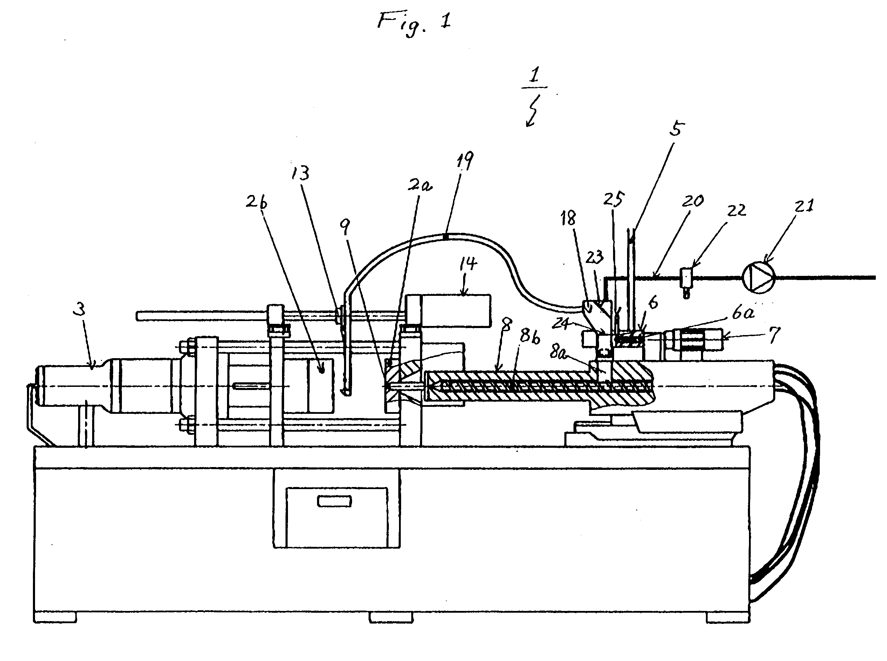

Referring to Figs. 1 to 5, an embodiment of the injection molding machine 1 in accordance with the invention is explained. In this embodiment, the injection molding machine 1 is designed for production of plastic substrates 4 of optical discs such as compact discs.

In the injection molding machine 1, the mold 2 is composed of the fixed half 2a which is called as a mirror stamper in case of production of substrate of optical discs and the movable half 2b on which the stamper is mounted in case of production of substrate of optical discs. At the beginning of every injection cycle, the movable half 2b is moved by the hydraulic cylinder 3 so that the two halves 2a and 2b of the mold 2 are closed to form a cavity corresponding the shape of the substarte 4.

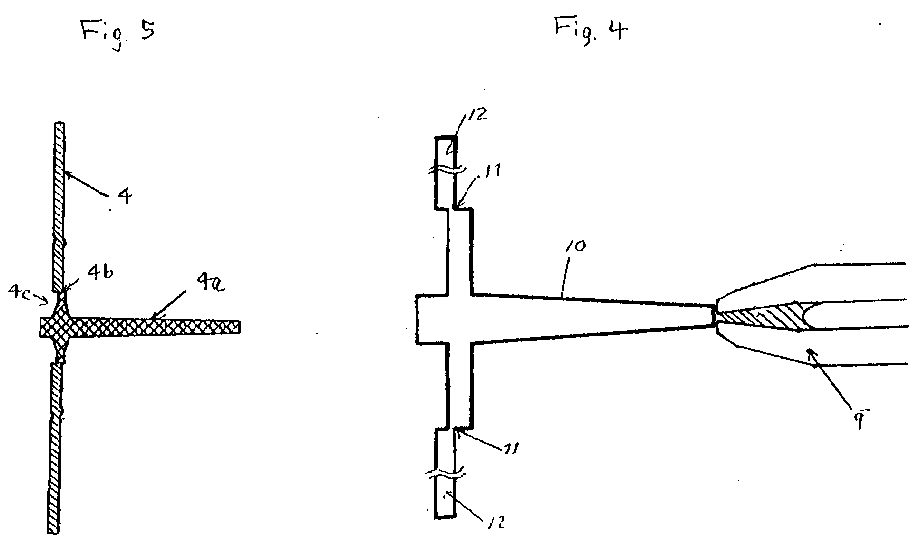

The pellet type or granulated raw material is supplied through the tube 5 to the feed cylinder 6. A predetermined quantity of material is measured by rotation of the feed screw 6a which is provided within the feed cylinder 6 and is driven by the motor 7 and supplied from the feed cylinder 6 to the main cylinder 8 through the connecting channel 8a. The feed cylinder 6 is arranged in parallel with the main cylinder 8. The pellet type material is molten and plasticized in the main cylinder 8 by means of the heater provided therein (not shown here). The molten material is injected by rotation of the main screw 8b which is provided within the main cylinder 8 and also driven by a motor (not shown here) through the nozzle 9, the sprue channel 10 and the gate 11 into the cavity 12 as shown in Fig. 4. The injection of the material takes place at the center of the cavity 12 due to the rotational symmetry of the substrate 4.

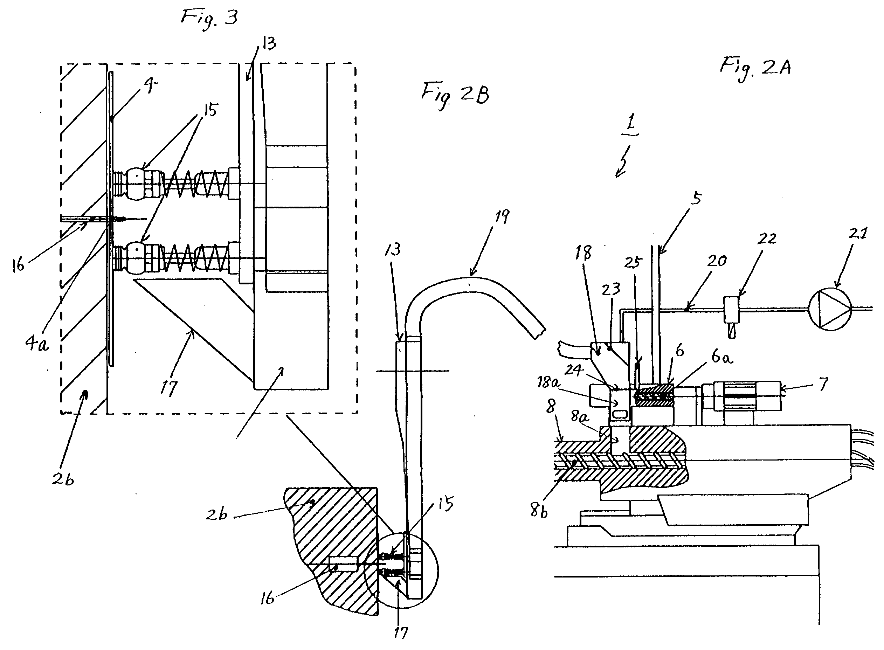

After cooling, the mold 2 is opened and the substrate 4 is transported by the movable half 2b of the mold 2 into unloading position as shown in Figs. 1 and 3. The unloader 13 driven by the motor 14 swings into between the two halves 2a and 2b and grips the substrate 4 with the suction cups 15 provided thereto.

The pusher 16 provided in the movable half 2b of the mold 2 mounted on the cylinder 3 pushes the center of the substrate 4. The sprue 4a is connected with the substrate 4 through a very thin section 4b formed by the gate 11 as shown in Fig. 5. If the center of the substrate 4 is pushed by the pusher 16, the sprue 4a is separated from the remainer of the substrate 4 so that the center hole 4c of the substrate 4 is formed. The unloader 13 swing back and takes the substrate 4 away from the movable half 2b of the mold 2 and puts it on a conveyor system (not shown here). The mold 2 is then closed again for the next cycle. The above construction and process are well known. Therefore detail explanation will be omitted.

In this embodiment, the funnel 17 is provided as a sprue collecting member and positioned in such a position that the sprue 4a separated by the pusher 16 drops down into the funnel 17. The funnel 17 can be physically fixed to the unloader 13. In this case, when the mold 2 is opened, the funnel 17 is swung between the two halves 2a and 2b of the mold 2 together with the unloader 13 to receive the sprue 4a.

The coupler 18 is provided into the material flow, preferably between the feed cylinder 6 and the main cylinder 8 and connected by the collection tube 19 with the funnel 17. The bottom 18a of the coupler 18 is open to the material flow. In the embodiment shown in Figs. 1 and 2A, the coupler 18 is provided between the feed cylinder 6 and the main cylinder 8 and the bottom 18a of the coupler 18 is open to the connecting channel 8a.

The coupler 18 is connected on its top through the air tube 20 to the vaccum pump 21. When the funnel 17 receives the sprue 4a or the funnel 17 swings into between two halves 2a and 2b of the mold 2, the pump 21 is driven so that the sprue 4a which drops into the funnel 17 is sucked into the coupler 18 by the pump 21. In order to drive the pump 21 continuously, the valve 22 can be provided for cutting the air flow from the coupler 18 to the pump 21.

When the sprue 4a is separated from the substrate 4, material dust, very small pieces of the material are also produced. In general, however, such material dust is deemed as impurity and may disturb the production process. Therefore, when the sprue 4a is sucked by the pump 21, such material dust is also sucked from the funnel 17 into the coupler 18 so that the production area, especially the mold 2, is kept clean, if the funnel 17 is so formed and located close by the mold 2 and the sucking power of the pump 21 is strong enough.

The material dust may be burned by heating at the main cylinder 8 and/or cause defect in the molded plastics. Therefore, the mesh 23 is provided in the coupler 18 in the front of the air tube 20 to not only avoid sucking the sprue 4a directly through the air tube 20 into the pump 21 and but also separate the sprue 4a from the dust which is sucked by the pump 21 and filtered out.

The shutter 24 which can be opened and closed automatically with the air cylinder 25 is provided to prevent the material from being sucked out of the connecting channel 8a and/or main cylinder 8 into the coupler 18.

When the sprue 4a is separated from the substrate 4 by the pusher 16, it is sucked by the pump 21 into the coupler 18. At that time the shutter 24 is closed to prevent the material from being sucked. When the pump 21 is inoperative or disconnected by the valve 22, the shutter 24 is opened to enable the sprue 4a to drop into the main cylinder 8 without passing the feed cylinder 6.

If the sprue 4a is too large to be provided into the material flow as it is, it should be broken into smaller pieces by an additional breaking member. However, it is also possible to make the sprue 4a enough small to be provided as it is into the materil flow, especially into the main cylinder 8 by reducing the geometrical dimensions of the sprue 4a especially by reducing the length of the sprue channel 10 of the injection mold machine 1 without any influence to the quality of the substrate 4.

The sprue 4a is fed back into the material flow every injection cycle in the above embodiement. The optical quality of the substrate 4 cannot be influenced by the gathered recycled material scattered inhomogeneously in the substrate 4. However, if it will be allowed, it is also possible to feed back them after the several sprue 4a are collected.

The sprue 4a is fed back between the feed cylinder 6 and the main cylinder 8 in the above embodiment. Returning the sprue 4a directly into the main cylinder 8 and not elsewhere in the material flow has the advantage that exactly one sprue 4a is recycled in one injection cycle so that a defined quantity of recycled material is assimilated in every substrate 4.

However, it is also possible the sprue 4a is fed back into any reasonable location between the tube 5 and the nozzle 9. In this case the coupler 18 is provided in the selected location.

It is also possible to apply this invention to the other type of molding machines or methods than the above embodiement. For example, the invention can be applied to a molding machine having multiple cavities. In this case, a plurality of formed plastics are produced in every one injection cycle and a plurality of sprues and/or runners can be fed back into the material flow after every injection cycle.

## Claims

1. A method of molding a plastic comprising steps of:
supplying material from the input member (5);
feeding the material;
melting the material;
injecting the molten material into the cavity (12) formed by the mold (2); separating the sprue (4a) and/or runner from the formed plasitcs (4); and
separating the formed plastics (4) from the mold (2);
characterized by;
feeding back the sprue (4a) and/or runner into the material flow.

2. A method of molding a plastic as claimed in Claim 1, characterized in that the step of feeding the material includes steps of feeding a predetermined quantity of the material fed from the feeding member (5) and the step of feeding back the sprue (4a) and/or runner includes the step of feeding back the sprue (4a) and/or runner before the step of melting the material.

3. A method of molding a plastic as claimed in Claim 1, characterized in that the step of feeding back the sprue (4a) and/or runner is performed every molding cycle.

4. A method of molding a plastic as claimed in Claim 1, characterized in that the step of feeding back the sprue (4a) and/or runner includes the step of break the sprue (4a) and/or runner into smaller pieces.

5. A method of molding a plastic as claimed in Claim 1, characterized in that the steps of feeding back the sprue (4a) and/or runner is synchronized with the step of separating the formed plastics (4) from the mold (2).

6. An apparatus for molding a plastic comprising:
supplying means (5) for supplying material;
feeding means (6, 6a, 8, 8a, 8b) for feeding the material;
heating means (8) for melting the material;
injection means (9) for injecting the molten material into the cavity (12) formed by the mold (2);
first separating means (16) for separating the sprue (4a) and/or runner from the formed plasitc (4); and
second separating means (13, 15) for separating the formed plastics (4) from the mold (2);
characterized by;
feeding back means (17, 18, 19) for feeding back the sprue (4a) into the material flow.

7. An apparatus for molding a plastic as claimed in Claim 6, characterized in that the feeding means (6, 6a, 8, 8a, 8b) includes means (6, 6a) for feeding a predetermined quantity of the material fed from the supplying means (5) and the feeding back means (17, 18, 19) includes means (17, 18, 19) for feeding back the sprue (4a) and/or runner in the feeding means (8, 8b) including heating means (8).

8. An appratus for molding a plastic as claimed in Claim 6, characterized in that the feeding back means (17, 18, 19) feed back the sprue (4a) and/or runner every molding cycle.

9. An appratus for molding a plastic as claimed in Claim 1, characterized in that the feeding back means (17, 18, 19)includes means for breaking the sprue (4a) and/or runner into smaller pieces.

10. An appratus for molding a plastic as claimed in Claim 1, characterized in that the feeding back means (17, 18, 19) feed back in synchronism with the second separating means (13).
